(19) **Europäisches Patentamt / European Patent Office / Office européen des brevets**

(11) **EP 2 014 358 A1**

(12) # EUROPEAN PATENT APPLICATION

(43) Date of publication:
**14.01.2009 Bulletin 2009/03**

(51) Int Cl.:
**B01J 20/04** *(2006.01)*   **B01J 20/30** *(2006.01)*

(21) Application number: **07013095.0**

(22) Date of filing: **04.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **SÜD-CHEMIE AG**
**80333 München (DE)**

(72) Inventors:
- **Ortiz Niembro, Jose Antonio**
  **Puebla, Pue. CP 72590 (MX)**
- **Gonzales Lozano, Eduardo**
  **Puebla CP 72050 (MX)**

- **Martinez Quevedo, Verónica**
  **Tenixco, Morelos 62584 (MX)**
- **Pacheco Garcia, Fidel**
  **San Andres Cholula, Pue., 72840 (MX)**
- **Rosano Ortega, Genoveva**
  **Puebla, Pue., 72060 (MX)**

(74) Representative: **Westendorp, Michael Oliver et al**
**Patentanwälte**
**Splanemann Reitzner**
**Baronetzky Westendorp**
**Rumfordstrasse 7**
**80469 München (DE)**

(54) **Preparation of hydrotalcite-like adsorbents useful for the adsorption of anionic materials**

(57)   The invention discloses a method for the synthesis of hydrotalcite-like adsorbent which is in particular suitable for the adsorption of sulfur-containing anions, e.g. in the purification of drinking water. The method comprises mixing an aqueous aluminium source and aqueous magnesium source with an alkaline and/or soda containing solution under high shear agitation. As the aluminium source is used an extract derived from the extraction of clays with strong mineral acids in the production of bleaching earth. The product can be easily separated and directly used as an adsorbent for different anions.

**Fig. 1**

Printed by Jouve, 75001 PARIS (FR)

**Description**

This invention relates to a method for the synthesis of an adsorbent which is in particular suitable for the adsorption of sulfur-containing anions in water purification. Further, the invention relates to a method for purification of water.

As a foodstuff drinking water must fulfill rigorous requirements as to purity and therefore has to pass several purification steps, e.g. to remove microbiological contaminants or heavy metal cations, before being ready to use. Humans however are very sensitive to some compounds and are able to recognize e.g. sulfurous compounds, e.g. $H_2S$, also at very low levels. Contamination of drinking water by $H_2S$ leads to a malodorous taste. This is in particular a problem in areas of volcanic activity where in many cases the drinking water also after standard purification contains traces of sulfurous compounds. To remove also traces of such sulfurous compounds the drinking water may be treated with an adsorbent. However such adsorbent must be able to treat large amounts of water without being degraded and further must be provided at low cost.

Layered Double Hydroxides (LDH) are a class of ionic lamellar solids comprising positively charged layers formed of divalent and trivalent metal cations, for example $Mg^{2+}$ and $Al^{3+}$. A typical representative of this class of minerals is hydrotalcite. The general formula of hydrotalcite is $Mg_6Al_2 (OH)_6CO_3 * 4H_2O$. The crystal structure of hydrotalcite may be derived from brucite, $(Mg(OH)_2)$, which forms an octahedron as a subunit of a layered structure. Partial replacement of $Mg^{2+}$ ions with $Al^{3+}$ ions in the brucite structure results in an excess of positive charge, which is compensated in the hydrotalcite structure by anions introduced between the layers of the crystal structure. Suitable anions are e.g. hydroxide and carbonate anions, which also may be hydrated. The anions introduced into interlayer spaces as well as crystal water molecules are only weakly bonded to the crystal layers. Therefore, hydrotalcite-like compounds can be used e.g. as anion exchangers, polymer stabilizer, antiacids anion scavengers, adsorbents and for the controlled release of anions.

US 4,458,030 discloses an adsorbent composition comprising a combination of a hydrotalcite compound and activated carbon. The hydrotalcite compound has a relatively high specific surface area, for example a BET specific surface area of about 50 to about 200 $m^2/g$ and a secondary particle diameter of about 0.1 - 10 $\mu$m. The composite adsorbent shows an increased adsorptive power in comparison to the individual compounds, in particular for anions like nitrate, chloride, sulfate, acetate, oxalate and iron hexacyanoferrate. The hydrotalcite used in the adsorbent may be available in the market or may be produced by methods known per se. For example, the hydrotalcite may be produced by reacting an aqueous solution of a water-soluble magnesium compound and/or a water soluble zinc compound, such as magnesium chloride, magnesium sulfate, zinc chloride and zinc sulfate, with an aqueous solution of a water-soluble aluminium compound, such as aluminium chloride, aluminium sulfate and sodium aluminate together with an aqueous solution of an alkali such as sodium hydroxide, potassium hydroxide, ammonia, sodium carbonate and sodium oxalate. If an aqueous solution of a zinc salt is used in this reaction, it is preferred to carry out the reaction at a pH of at least about 6. If an aqueous solution of a magnesium salt is used, the reaction is carried out preferably at a pH of at least about 8. The hydrotalcite may optionally be calcined at a temperature of up to about 800 °C.

DE 41 40 746 discloses a method for the sorption of weak polar and non-polar substances in polar media like process water. The method comprises the use of hydrophobically modified hydrotalcite for adsorption of hydrocarbons. The modified hydrotalcite is synthesized by mixing fatty acids with sodium aluminate and magnesia chloride.

US 5,399,329 discloses a process for producing hydrotalcite-like materials having a sheet-like morphology and having an average broadness to thickness ratio ranging from 50 to 5.000 and having the following formula:

$$(Mg_{1-x}Al_x) (OH)_2 xA^-. m H_2O$$

where A is a mono carboxylic anion of the formula $RCOO^-$, where R is of the formula $C_nH_{2n+1}$ and n = 0 - 5, x is a number ranging between 0.2 and 0.4 and m is a number between 0 and 4, said process comprising reacting a mixture of divalent metal cations comprising at least 50 mole percent magnesium cations and trivalent metal cations comprising at least 50 mole percent aluminium cations, said divalent and trivalent metal cations being present in a ratio of about 1 : 1 to about 10 : 1, with a mono carboxylic anion having 1 - 6 carbon atoms, in an aqueous slurry at a temperature of at least 40 °C, at a pH from 7 to about 12, and at a ratio of mono carboxylic anion to trivalent metal cation of about 0.1 to about 1.2 : 1, followed by drying said slurry at a temperature of at least 40 °C to crystallize a hydrotalcite-like material having a sheet-like morphology and having an average broadness to thickness ratio ranging from 50 to 5.000.

US 4,904,457 discloses a method of producing hydrotalcite, comprising:

a) heating magnesium carbonate or magnesium hydroxide to a temperature between about 500 - 900 °C to form activated magnesia;

b) reacting activated magnesia with an aqueous solution of aluminate, carbonate, and hydroxyl ions at a pH above about 13 to form hydrotalcite at a conversion yield greater than about 75 %.

In general, crystalline hydrotalcite compounds are excellent adsorbents for a variety of anions in many different applications. Nevertheless crystalline hydrotalcite compounds are relatively expensive due to the purity of the educts and complex synthesis conditions of the high crystalline hydrotalcite product. Special crystallization treatment and especially heating steps like calcination increase the complexity and the costs of the synthesis process even more.

Therefore it is an objective of the present invention to provide a method for the synthesis of an adsorbent suitable for the adsorption of different anions in a variety of environments, in particular for removing sulfur containing anions from drinking water, that does not afford expensive starting materials or complicated synthesis steps and therefore may be produced in a cost-efficient manner.

This objective is solved by a method according to claim 1. Preferred embodiments are defined in the depending claims.

According to the invention an extract produced as a by-product in the manufacturing of bleaching earth is used as a starting material in the synthesis of the adsorbent. The extract is selected such that the extract is rich in aluminium ions and rich in iron ions. The extract usually also contains magnesium ions such that the extract, at least in part, may also serve as a magnesium source for the production of an adsorbent. The inventors have found that by using an extract obtained as by-product in the production of bleaching earth that is rich in iron ions, an adsorbent is obtained that is particularly suitable for removing sulfur-containing anions, in particular sulfide ions and sulfate ions, from drinking water. The precipitate obtained by addition of a base and carbonate ions must only be dried and optionally milled after separation from the liquid phase and must not be calcined at higher temperatures. Therefore the process of the invention may be performed in a simple and cost-efficient manner and provides an adsorbent with sufficient adsorption capacity to be used in the purification of drinking water.'

According to the invention is provided a method for the synthesis of an adsorbent suitable for the adsorption of anions, comprising at least the following steps:

a) extracting a clay with mineral acid and separating the liquid extract phase thereby providing an acid extract containing at least 6,5 g/l aluminium ions and at least 4,5 g/l iron ions;

b) adjusting the magnesium concentration of the acid extract by adding a magnesium source to the acid extract until a magnesium concentration of at least 6,8 g/l is obtained;

c) adjusting the pH of the acid extract to at least pH = 7 by adding an aqueous alkaline solution thereby obtaining a neutralized extract;

d) after adjustment of the pH to at least pH = 7, adding a carbonate source to the neutralized extract thereby obtaining a carbonated extract;

e) separating a precipitate from the carbonated extract formed during addition of the aqueous alkaline solution and the carbonate source to the acid extract;

f) drying and optionally milling the precipitate;

wherein no calcination is performed on the precipitate.

Bleaching earths are provided by extracting naturally occurring clays with strong mineral acids. Naturally occurring clays contain a variety of different cations like Na, K, Ca, Mg, Al and Fe. During extraction of these clays, e.g. by cooking these clays with a strong mineral acid, part of the cations are dissolved from the clay mineral and form a cation rich acid solution. This solution is separated from the extracted clay material and is used e.g. in the treatment of waste water. The acid treated clay may be used as bleaching earth for the treatment of edible oils or as catalyst material. Due to the economical relevance of bleaching earths in many industrial applications, the cation rich by-product solution is highly available and cheap.

The acid extract obtained as a by-product in the production of bleaching earth is selected such, that it is containing at least 6,5 g/l aluminum ions and at least 4,5 g/l iron ions, both calculated as elemental aluminum and elemental iron. If necessary, the iron content of the acid extract may be adjusted by adding suitable iron compounds, e.g. iron oxide or iron chloride.

According to the invention the acid extract provided as a by-product in the production of bleaching earth is combined with a magnesium source to adjust the magnesium concentration of the acid extract to at least 6.8 g/l, preferably within a range of 11.0 to 25.0 g/l, calculated as elemental magnesium. Many of the clays used as starting material in the production of bleaching earths also contain magnesium ions which are extracted during treatment of the clay with strong mineral acids. Therefore, the acid extract used as an aluminium source and an iron source in the method according to the invention also is rich in magnesium ions and, therefore, in most cases only an amount of magnesium ions has to be added which corresponds to the difference in magnesium concentration in the acid extract and the adsorbent to be synthesized. The acid extract provided by the extraction of clays may therefore also serve at least in part as a magnesium source. Use of the extract therefore allows a very cost-efficient synthesis of the adsorbent. Besides aluminum, iron and magnesium ions the extract also may contain a high number of further ions. However, it was found that the presence of these further ions does not have any detrimental effect on the adsorption capacity of the adsorbent and no heavy metal ions are leached out during treatment of water with the adsorbent obtained by the method according to the invention.

The acid extract obtained from the bleaching earth production is combined with the magnesium source and then the pH of the acid extract is adjusted to at least pH = 7 by adding an aqueous alkaline solution to thereby obtain a neutralized extract. During adjustment of the pH-value a precipitate is produced. To achieve complete precipitation of the metal ions the pH-value is preferably adjusted to at least pH = 8, and is particularly adjusted within a range of 7,5 to 9,0.

As an alkaline solution may be used a solution of e.g. $NaOH$, $KOH$, $Ca(OH)_2$, $Mg(OH)_2$. Preferably, $NaOH$ is used as a base to neutralize the aluminium/magnesium source mixture. The solution may be a concentrated solution. However, preferably a diluted aqueous alkaline solution is used to allow better handling and a better removal of the heat produced during neutralization. Preferably, the aqueous alkaline solution comprises 1 to 40 wt.-%, particularly preferred 10 to 30 wt.-% of the base.

To the neutralized extract is then added a carbonate source to introduce carbonate ions as gallery ions and to thereby obtain a carbonated extract. Any suitable carbonate source may be used. A suitable carbonate source may be selected from the group of $Na_2CO_3$, $NaHCO_3$, $K_2CO_3$, $KHCO_3$, $CaCO_3$, $Ca(HCO_3)_2$, $MgCO_3$, $Mg(HCO_3)_2$. The compounds may be used in pure form or as a mixture. According to a preferred embodiment sodium carbonate (soda) is used as the carbonate source. During addition of the carbonate source the pH of the mixture is preferably adjusted to at least 8, particularly preferred within a range of 8,5 to 9,5.

After addition of the carbonate source the precipitate is separated from the carbonated extract by suitable means, e.g. by filtration.

The separated precipitate is then dried and optionally milled. The precipitate is dried at a low temperature at which the carbonate ions and the water bound in the adsorbent will not be separated from the crystal structure. The temperature used for drying therefore is adjusted to 200 °C at most, preferably within a range of 100 °C to 150 °C, particularly preferred within a range of 100 to 130 °C. It is not necessary to calcinate the precipitate to thereby obtain a well established hydrotalcite structure. Accordingly, in the method according to the invention, the precipitate preferably is not treated at a temperature of more than 300 °C, particularly preferred not more than 200 °C and most preferred is not treated at a temperature of more than 150 C. The method according to the invention therefore does not comprise a calcination step and therefore the corresponding costs for energy are safed.

The dried precipitate may be milled to adjust the particle size. The particle size is preferably adjusted to < 200 $\mu$m, particularly preferred within a range of 50 to 100 $\mu$m. The particle size may be determined e.g. by sieving or laser granulatometry.

The adsorbent may be used in the form of a powder or may be formed to shaped bodies in a known manner.

According to a preferred embodiment the aqueous alkaline solution is added under high shear. The high shear condition supports an uniform product forming process and prevents an early agglomeration and flocculation. In general every suitable (slurry) mixing device, including ultra-sonic treatment, can be used to induce the high shear agitation. The duration and intensity of the high shear agitation can be varied depending on educt and product properties, like solubilty, particle size and dispersity. Preferably the high shear condition is continued throughout the synthesis, i.e. until separation of the precipitate from the liquid phase.

The carbonate source may be added to the neutralized extract in solid form. Preferably, however, the carbonate source is added in the form of an aqueous solution to achieve a rapid reaction with the precipitate.

The aqueous carbonate source solution may be used in concentrated or diluted form. Preferably the aqueous carbonate source has a solid content within a range of 1 to 40 wt.-%, particularly preferred within a range of 10 to 25 wt.-%.

The liquid acid extract phase provided as the starting material for the method according to the invention may be adjusted to any suitable temperature. However, to achieve a high concentration of dissolved aluminium salts and to avoid premature precipitation of the dissolved aluminium salts the liquid acid extract phase provided from the bleaching earth production is preferably adjusted to a temperature in a range of 50 to 90 °C, particularly preferred in a range of 55 to 75 °C. Handling of the liquid acid extract phase at temperatures above 90 °C causes problems because of high corrosion of the apparatuses used for the synthesis of the adsorbent.

The aqueous alkaline solution and/or the carbonate source is preferably added at such a rate to the acid extract, that the heat produced by the neutralization reaction can be conveniently removed. Preferably during addition of the aqueous alkaline solution and/or the carbonate source, the acid extract is kept at a temperature within a range of 50 to 90 °C, particularly preferred within a range of 55 to 75°C. If necessary, a cooling equipment may be provided to remove the heat produced during addition of the base.

The acid extract phase provided by the extraction of clays in the production of bleaching earth may be used as it is obtained in the extraction process. However to avoid premature precipitation of aluminium salts, e.g. by cooling the liquid extract, the liquid acid extract phase provided from the bleaching earth production preferably has a solid content of less than 25 wt.-%, particularly preferred within a range of 10 to 20 wt.-%.

To avoid large amounts of waste water in the process of the invention a high concentration of aluminum is preferred in the acid extract liquid phase. Preferably the acid extract has an aluminum concentration of at least 8.5 g/l, calculated as elemental aluminum. Particularly preferred the aluminium concentration of the acid extract phase is adjusted within a range of 7.5 to 10.8 g/l.

Further, the acid extract preferably contains at least 3.0 g/l iron ions, particularly preferred 4.5 to 6.0 g/l of iron ions, calculated as elemental iron.

The acid extract used as the starting material in the method according to the invention may be used as obtained in the extraction of clay with mineral acid in the production of bleaching earth. However, it is also possible to dilute the liquid extract phase to thereby better control the neutralization process. Preferably the liquid extract phase provided as an aluminium source has an acid content of less than 20 wt.-%, particularly preferred within a range of 5 to 10 wt.-%.

To achieve a homogenous product, according to a preferred embodiment after addition of the magnesium source to the acid extract, the mixture is agitated at least 5 minutes, particularly preferred at least 10 minutes, before adding the aqueous alkaline solution.

To achieve a thorough insertion of the carbonate ions into the crystal structure, after addition of the carbonate source the carbonated extract is preferably reacted for at least 1 hour, particularly preferred for at least 2 hours.

To remove excess anions, the precipitate is preferably washed with water after separation of the precipitate from the carbonated extract, i.e. before drying. As in the drinking water anions, e.g. carbonate anions, are present, it is not necessary to use distilled water for purification. To achieve sufficient removal of anions it is sufficient to use tap water. In particular, sulfate ions present in the precipitate should be removed. The washing is preferably continued until the anion concentration in the washing water is below 3650 mg/l. The anion concentration may be determined by standard methods known in the field of drinking water technology.

The acid extract used as the starting material in the method according to the invention is obtained by extraction of clay materials with strong mineral acid. As most clays also contain magnesium, the extract also contains magnesium ions. A typical magnesium concentration in the liquid extract, calculated as elemental Magnesium, is in a range of 6.5 to 7.5 g/l. If the magnesium ion concentration is not high enough to obtain the desired magnesium concentration in the adsorbent material, a magnesium source is added to the aluminium source. A preferred magnesium source is $Mg(OH)_2$. Such $Mg(OH)_2$ may be provided e.g. in the form of brucite. Other suitable magnesium sources are magnesium carbonate, activated magnesium oxide, or magnesium chloride.

As already discussed above, the mixture of the acid extract serving as aluminium and iron source, magnesium source, aqueous alkaline solution and carbonate source is preferably kept under high shear conditions during the synthesis. According to a preferred embodiment, the high shear condition is achieved by stirring the mixture at a rotation speed within a range of 100 to 5000 rpm, preferably within the range of 1000 to 3000 rpm. In general every suitable (slurry) mixing device can be used to induce the high shear agitation. However, the stirring apparatus used should withstand the highly acidic or basic conditions present during the synthesis of the adsorbent. The duration and intensity of the high shear agitation can be varied depending on educt and product properties, like solubilty, particle size and dispersity.

According to a preferred embodiment the continuous high shear agitation lasts for 1 - 480 minutes, preferably lasts for 10 - 240 minutes and particularly preferred lasts for 25 - 130 minutes.

The clay used as a starting material for obtaining the liquid acid extract phase used as the aluminium and iron source in the method according to the invention may be every clay commonly used for the production of bleaching earth. Preferably, the clay is selected from the group of smectitic clays. Preferred smectitic clays are selected from the group consisting of montmorillonite, bentonite, hectorite, nontronite, vermiculite, illite, saponite. Bentonite is particularly preferred. Bentonite mainly comprises montmorillonite. Montmorillonite has the general formula $(Al_{3.2}Mg_{0.8}) (Si_8)O_{20}(OH)_4 (CO_3)_{0.8}$.

The strong mineral acid used for extracting the clay may be every mineral acid commonly used in the production of high performance bleaching earth. Preferably, the mineral acid used for extracting the clay is selected from the group consisting of hydrochloric acid, sulfuric acid, phosphoric acid, nitric acid and mixtures thereof.

The conditions used for extracting the clay are common to the skilled person. Preferably the extraction is performed at a temperature close to the boiling point of the liquid phase. A preferred temperature range is 80 to 100 °C, particularly preferred a range of 85 to 95 °C. The duration of the extraction is selected such as desired by the activation of the bleaching earth. Preferably the duration of the extraction is selected within a range of 1 to 10 hours, particularly preferred 4 to 8 hours. The molar ratio Al/Mg in the reaction mixture, i.e. after adding the magnesium source to the aluminium source, is preferably selected within a range of 1.0 to 5.0, particularly preferred 2.0 to 3.0.

Besides aluminum, iron and optionally magnesium, the acid extract obtained from the bleaching earth production and used as the starting material for the process according to the invention may contain further metal cations. Preferred further metal cations are selected from the group of Ca, Na, K, Li, $NH_4^+$.

The adsorbent obtained with the method according to the invention has a high absorption capacity for anions and may be produced in an cost efficient manner.

According to a further aspect the invention therefore is directed to a method for purification of water, wherein an adsorbent is prepared with a method as described above and the water to be purified is contacted with the adsorbent.

The adsorbent binds a variety of inorganic anions, e.g. $SO_4^{2-}$, $SO_3^{2-}$, $S^{2-}$, $NO_3^-$, $NO_2^-$, $CN^-$, $N_3^-$, $CrO_4^{2-}$, $PO_4^{2-}$ and organic anions like $CH_3COO^-$, $H_2COO^-$ and $(O_2CCO_2)^{2-}$.

The purification is performed in a known manner by e.g. mixing the water to be purified with a powder of the adsorbent. Suitably, the amount of adsorbent added to the water to be purified is preferably at least 4 mg/l and is particularly preferred selected within a range of 5 to 10 mg/l, most preferred within a range of 6 to 8 mg/l. According to another embodiment the adsorbent may be provided in the form of spherical bodies that may form a fixed bed and the water to be purified is directed through the fixed bed.

The water to be purified may be e.g. spring-water, ground-water or surface water derived from e.g. rivers or lakes. However, the adsorbent may also be used for the purification of beverages, foodstuff, swimming pool water, urban or industrial waste water.

The adsorbent is in particular suitable for the removal of sulfur-containing anions, like $S^{2-}$, $SO_3^{2-}$ and $SO_4^{2-}$. Additionally the adsorbent decreases the hardness of water by removing carbonate anions, thereby lowering the amount of hardly soluble salts like $CaCO_3$, $MgCO_3$, $CaSO_4$ and $MgSO_4$. Preferably, the water to be purified has a sulfur content of at least 300 mg/l, particularly preferred of at least 500 mg/l and most preferred is within a range of 400 to 100 mg/l, calculated as $SO_4^{2-}$ anions. The sulfur content of the water to be purified may be detected e.g. by the method described below.

The following figures and examples will serve to illustrate certain embodiments of the herein disclosed invention. These figures and examples should not, however, be construed as limiting the scope of the invention.

Fig. 1: is a XRD pattern of the adsorbent obtained by the method according to the invention.

Fig. 2: is a diagram showing the amount of $SO_4^{2-}$, water hardness and pH after treatment of a water sample with various amounts of adsorbents.

Analytical methods:

Detection of water hardness

"X" ml of the water sample to be analyzed are accurately measured into a 25 ml Erlenmeyer flask. A magnetic bar is inserted into the flask and the sample is stirred. Then "X" ml of a buffer solution, prepared by dissolving 16.9 g of ammonium chloride in 143 ml of 1 m ammonium hydroxide and a small amount of eriochrome black indicator are added and the mixture is titrated with 0.01 M EDTA solution until the red color of the indicator turns to blue. The amount of EDTA-solution ("A" ml) used is noted and the hardness is calculated according to the following equitation:

$$Hardness\left(mg\ CaCO_3 \middle/ L\right) = \frac{A \times B \times 1,000}{mL\ Sample}$$

where A is the ml of the EDTA solution used in the titration, B is the mg $CaCO_3$ equivalent to 1 ml of EDTA solution. For a 0.01 M EDTA solution, B is 1 mg $CaCO_3$ / 1 ml of EDTA solution.

Detection of amount of $SO_4^{2-}$

The sulfate ions are precipitated in a hydrochloric acid medium with barium chloride ($BaCl_2$) so as to form barium sulfate ($BaSO_4$) crystals of uniform size. Light absorbance of the $BaSO_4$ suspension is measured by a nephelometer or transmission photometer and the sulfate concentration is determined by comparison of the reading with a standard curve.

100 ml of the sample to be analyzed are pipetted into a 250 ml Erlenmeyer flask. A magnetic bar is inserted into the flask and the sample is stirred. 5.00 ml conditioning agent, prepared by dissolving 30 g of magnesium chloride, 5 g sodium acetate, 1 g potassium nitrate and 20 ml of acetic acid in 500 ml of distilled water, are added and then a

spoonful of BaCl$_2$ crystals and the solution is stirred for 1.0 min at constant speed. Immediately after the stirring period has ended the solution is poured into the aabsorption cell of the photometer (spectrometer: SPECTROQUANT Nova 60, 420 nm, light path 4 cm) and the turbidity is measured at 30 s intervals for 4 min. Maximum turbidity usually occurs within 2 min and readings remain constant there after 3 to 10 min. Turbidity is considered to be the maximum reading in the 4 min interval. The amount of sulfate ions is calculated according to the following equitation:

$$sulfate, mgSO_4 / L = \frac{mgSO_4 \, x1,000}{mLsample}$$

Determination of pH

The pH is determined with a calibrated glass electrode.

Detection of aluminum, iron and magnesium content in acid extract:

The analysis of these metals is performed by means of a Spectrophotometer ICP plasma model Optima 3100 XL from Perkin Elmer, USA, according to the manufacturer's instructions. The sample is injected into a high-temperature argon plasma, where the atoms are vaporized, excited and subsequently emit light that can be measured.

Determination of sulfide amount

From a buret an amount of iodine solution is measured into a 500 ml flask estimated to be an excess over the amount of sulfide present. If necessary, the volume of the solution is brought to about 20 ml by addition of distilled water. Then, 2 ml of 6 N HCl are added. 200 ml of the sample to be analyzed are pipetted into the flask. The sample is back titrated with Na$_2$S$_2$O$_3$ solution until the iodine color disappears. Towards the end of the titration starch solution is added for better visibility of the end point. If sulfide was precipitated with zinc and ZnS filtered out, the precipitate is washed into the flask with about 100 ml of water. After addition of iodine solution and HCl, the sample may be back titrated as described above.

1 ml of 0.0250 N iodine solution reacts with 0.4 mg sulfide.

The amount of sulfide is calculated according to the following equitation:

$$mgS / L = \frac{((AxB) - (CxD))x16,000}{mLsample}$$

where:

A = ml iodine solution
B = normality of iodine solution
C = ml Na$_2$S$_2$O$_3$ solution
D = normality of Na$_2$S$_2$O$_3$ solution

Example 1: Preparation of the adsorbent

In a three necked flask equipped with a stirrer, a dropping funnel and a thermometer was placed 1631 g of an acidic aluminium solution (Sudflock®, Süd-Chemie AG, München, DE) derived from extraction of clay with hydrochloric acid and having a composition as listed in table 1. The solution was heated to 60 °C and then 98 g aqueous solution of Mg(OH)$_2$ (20 wt.-%) was added drop wise under high shear agitation. During addition of the magnesium salt solution the temperature of the mixture was kept at 60 °C. After addition the mixture was kept at 60 °C for further 10 minutes while continuing high shear agitation. Thereafter 667 g aqueous solution of NaOH (20 wt. %) was added drop wise until the pH reaches 7. If necessary, the mixture was cooled by use of an ice-bath. Finally 783 g aqueous solution of Na$_2$CO$_3$ (20 wt. %) was added drop wise until the pH reaches 10. The mixture was kept at 60 °C for one hour while continuing high shear agitation. The mixture was cooled to room temperature and then filtered through a buchner funnel. The solids were washed 5 times with 500 ml tap water each to remove sulfate impurities. The solids were placed on a glass dish and dried at 120 °C over night in an oven. The dried solids were milled and sieved through a mesh of 75 μm mesh size.

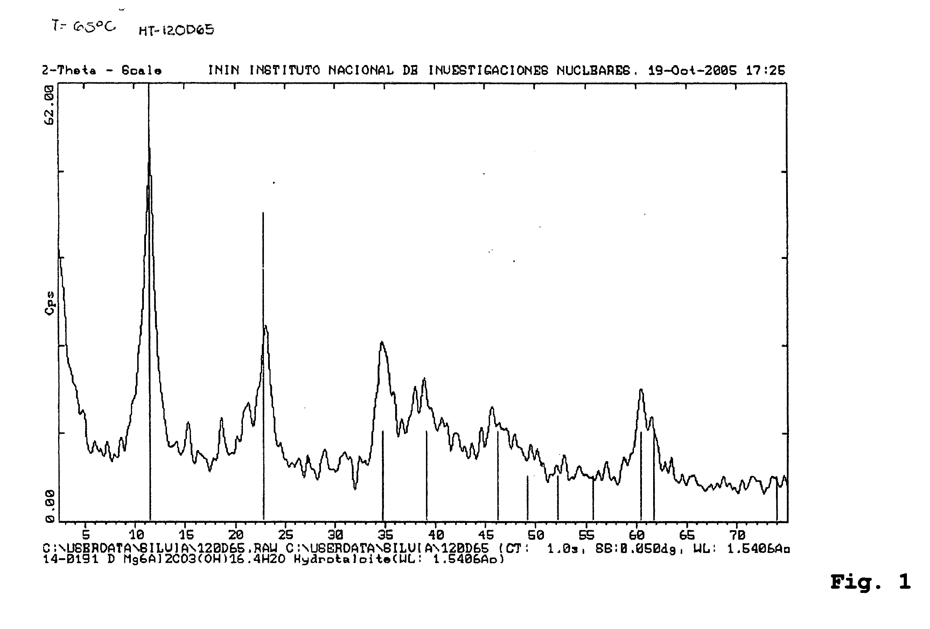

A diffraction pattern of the adsorbent is displayed in fig. 1.

Table 1: Composition of the acidic aluminium solution (Südflock®)

| ELEMENT | |
|---|---|
| Mg (ppm) | 3932 |
| Al (ppm) | 7608 |
| Fe (ppm) | 5230 |
| Ca (ppm) | 892 |
| Density | 1.16 g/ml |
| Acidity | 8,0% |
| pH | <1.0 |
| Solids | 17,60% |

Example 2: Sulfate adsorption tests:

To 1 l of tap water having a $SO_4^{2-}$ concentration of 850 mg/l, a water hardness of 1150 and a pH of 7, adjusted to room temperature was added the adsorbent obtained in example 1 in a concentration as summarized in table 1. In a further example, 200 mg Synthal® 701 (Süd-Chemie AG, München, DE) were used as a comparison. The samples were stirred for 1 h at room temperature. Then, the adsorbent was separated by filtering through a paper filter and the samples analyzed as to their $SO_4^{2-}$ concentration, water hardness and pH.

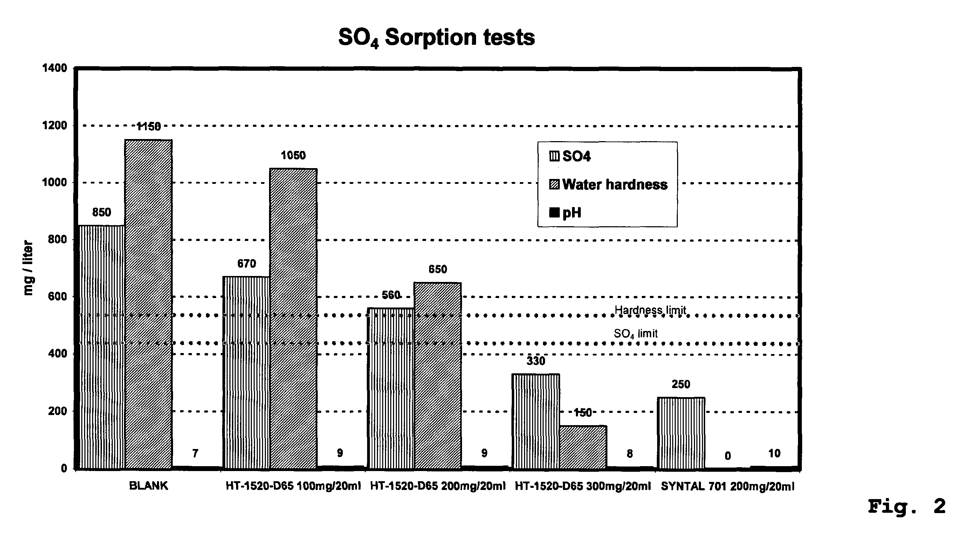

The results of the adsorption tests are summarized in table 2 and are displayed in Fig. 2.

| Example | adsorbent | Amount (mg/l) | $SO_4^{2-}$ (mg/l) | Water hardness | pH |
|---|---|---|---|---|---|
| 1 | blank | -- | 850 | 1150 | 7 |
| 2 | Ex.1 | 100 | 670 | 1050 | 9 |
| 3 | Ex.1 | 200 | 560 | 650 | 9 |
| 4 | Ex.1 | 300 | 330 | 150 | 8 |
| 5 | Synthal® 701 | 200 | 250 | 0 | 10 |

**Claims**

1. Method for the synthesis of an adsorbent suitable for the adsorption of anions, comprising at least the following steps:

   a) extracting a clay with mineral acid and separating the liquid extract phase thereby providing an acid extract containing at least 6,5 g/l aluminium ions and at least 4,5 g/l iron ions;
   b) adjusting the magnesium concentration of the acid extract by adding a magnesium source to the acid extract until a magnesium concentration of at least 6.8 g/l is obtained;
   c) adjusting the pH of the acid extract to at least pH = 7 by adding an aqueous alkaline solution thereby obtaining a neutralized extract;
   d) after adjustment of the pH to at least pH = 7, adding a carbonate source to the neutralized extract thereby obtaining a carbonated extract;
   e) separating a precipitate from the carbonated extract formed during addition of the aqueous alkaline solution and the carbonate source to the acid extract;
   f) drying and optionally milling the precipitate;

   wherein no calcination is performed on the precipitate.

2. Method according to claim 1, wherein the aqueous alkaline solution is added under high shear.

3. Method according to one of the preceding claims, wherein the carbonate source is added as an aqueous solution.

4. Method according to claim 3, wherein the concentration of the aqueous carbonate source solution is selected within a range of 10 to 25 wt.-%.

5. Method according to any of the preceding claims, wherein the liquid extract phase provided as the aluminium source is adjusted to a temperature in a range of 50 to 90 °C.

6. Method according to any of the preceding claims, wherein during addition of the aqueous alkaline solution and/or the carbonate source, the extract is kept at a temperature within a range of 50 to 90 °C.

7. Method according to one of the preceding claims, wherein the acid extract obtained by extracting a clay has a solid content of less than 20 wt.-%.

8. Method according to any one of the preceding claims, wherein the acid extract obtained by extracting a clay has an acid content of less than 20 wt.-%.

9. Method according to any one of the preceding claims, wherein after adjusting the magnesium concentration in the acid extract the mixture is agitated at least 5 minutes before adding the aqueous alkaline solution.

10. Method according to any one of the preceding claims, wherein after addition of the carbonate source the mixture is reacted for at least 1 hour.

11. Method according to any one of the preceding claims, wherein after separation of the precipitate, the precipitate is washed with water.

12. Method according to one of the preceding claims, wherein the magnesium source comprises $Mg(OH)_2$.

13. Method according to one of the preceding claims, wherein the carbonate source is selected from the group consisting of $Na_2CO_3$, $NaHCO_3$, $K_2CO_3$, $KHCO_3$, $CaCO_3$, $Ca(HCO_3)_2$, $MgCO_3$, $Mg(HCO_3)_2$.

14. Method according to one of the preceding claims, wherein the aqueous alkaline solution comprises at least one compound selected from the group consisting of NaOH, KOH, $Ca(OH)_2$, $Mg(OH)_2$.

15. Method according to one of the preceding claims, wherein the high shear condition is achieved by stirring the magnesium/aluminium mixture at a rotation speed within a range of 100 - 5000 rpm, preferably in a range of 1000 - 3000 rpm.

16. Method according to one of the preceding claims, wherein the high shear agitation is continued until separation of the precipitate.

17. Method according to one of the preceding claims wherein the adsorbent after drying is not subjected to a calcination procedure.

18. Method according to one of the preceding claims, wherein the clay is selected from the group of smectic clays, preferably from the group consisting of montmorillonite, bentonite, hectorite, nontronite, vermiculite, illite, saponite, preferably bentonite.

19. Method according to any one of the preceding claims, wherein the mineral acid used for extracting the clay is selected from the group consisting of hydrochloric acid, sulfuric acid, phosphoric acid, nitric acid and mixtures thereof.

20. Method for purification of water, wherein an adsorbent is prepared with a method according to one of claims 1 to 19 and the water to be purified is contacted with the adsorbent.

21. Method according to claim 20, wherein the water to be purified contains sulfur-containing anions.

Fig. 1

**SO₄ Sorption tests**

Fig. 2

**European Patent Office**

**EUROPEAN SEARCH REPORT**

Application Number

EP 07 01 3095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 4 904 457 A (MISRA CHANAKYA [US]) 27 February 1990 (1990-02-27) ----- | 1-21 | INV. B01J20/04 B01J20/30 |
| A | US 6 171 991 B1 (STAMIRES DENNIS [US] ET AL) 9 January 2001 (2001-01-09) ----- | 1-21 | |
| A | WO 96/05140 A (ALUMINUM CO OF AMERICA [US]; MARTIN EDWARD S [US]; HORN WILLIAM E JR []) 22 February 1996 (1996-02-22) ----- | 1-21 | |
| T | "RÖMPP ONLINE" [Online] July 2006 (2006-07), GEORG THIEME VERLAG , STUTTGART , XP002458682 Retrieved from the Internet: URL:http://www.roempp.com/prod/index1.html > [retrieved on 2007-11-13] "Stichwort: Mineralsäuren" * abstract * ----- | 1-19 | |

TECHNICAL FIELDS SEARCHED (IPC)

B01J
C02F

The present search report has been drawn up for all claims

| Place of search | Date of completion of the search | Examiner |
|---|---|---|
| Munich | 28 November 2007 | Klaes, Daphne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 3095

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2007

| Patent document cited in search report | | Publication date | Patent family member(s) | | Publication date |
|---|---|---|---|---|---|
| US 4904457 | A | 27-02-1990 | NONE | | |
| US 6171991 | B1 | 09-01-2001 | US | 6440887 B1 | 27-08-2002 |
| | | | US | 6376405 B1 | 23-04-2002 |
| WO 9605140 | A | 22-02-1996 | AT | 186281 T | 15-11-1999 |
| | | | AU | 704214 B2 | 15-04-1999 |
| | | | AU | 1559395 A | 07-03-1996 |
| | | | BR | 9508872 A | 06-01-1998 |
| | | | CA | 2197664 A1 | 22-02-1996 |
| | | | CZ | 9700469 A3 | 17-03-2004 |
| | | | DE | 69513182 D1 | 09-12-1999 |
| | | | DE | 69513182 T2 | 25-05-2000 |
| | | | EP | 0776317 A1 | 04-06-1997 |
| | | | ES | 2140657 T3 | 01-03-2000 |
| | | | HU | 77873 A2 | 28-09-1998 |
| | | | IL | 114953 A | 01-06-2000 |
| | | | JP | 10503465 T | 31-03-1998 |
| | | | JP | 3112684 B2 | 27-11-2000 |
| | | | SK | 21197 A3 | 10-12-1997 |

EPO FORM P0459

For more details about this annex : see Official Journal of the European Patent Office, No. 12/82

**EP 2 014 358 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4458030 A
- DE 4140746
- US 5399329 A
- US 4904457 A